# EUROPEAN PATENT SPECIFICATION

(11) **EP 0 551 882 B1**
(45) Date of publication and mention of the grant of the patent: **29.05.1996**
(21) Application number: 93100414.7
(22) Date of filing: 13.01.1993
(51) Int. Cl.: B60H 1/34, B60H 1/00, G05G 9/02

(54) **Motor vehicle air vent, with improved slider means for actuating the flow deflection vanes**
Luftaustritt für Kraftfahrzeuge mit Schiebern zur Verstellung der Luftleitschaufeln
Dispositif aérateur pour véhicule automobile avec coulisse perfectionnée pour l'actionnement des ailettes de déflexion du débit

(30) Priority: 17.01.1992 IT TO920012 U
(43) Date of publication of application: 21.07.1993
(73) Proprietor: FOGGINI PROGETTI S.r.l., I-10092 Beinasco Torino (IT)
(72) Inventor: Vercesi, Piercarlo, I-10100 Torino (IT); Davico, Claudio, I-10094 Giaveno (Prov. of Torino) (IT); Giorgini, Gerardo, I-10024 Moncalieri (Prov. of Torino) (IT)
(74) Representative: Modiano, Guido, Dr.-Ing.

(56) References cited:
- EP-A- 0 397 909
- DE-A- 3 909 645
- FR-A- 2 616 386
- PATENT ABSTRACTS OF JAPAN vol. 8, no. 108 (M-297)(1545) 19 May 1984 & JP-A-59 018 011(NISSAN JIDOSHA K.K.)

## Description

The present invention relates to an air vent for dispensing the air for the conditioning of motor vehicles and more precisely to an air vent with orientatable flow which comprises two perpendicular rows of deflection vanes pivoted to the vent body.

Air vents of the specified type are already known wherein the first row of generally vertical vanes, which is arranged upstream with reference to the direction of air flow, receives the orientation actuation from a toothed sector which meshes with the correspondingly toothed portion of a slider which is slideably mounted on the central vane of the second row of generally horizontal vanes, which is arranged downstream with reference to the direction of the flow.

In these known vents, the actuation slider is slideably connected on said central vane with the interposition of a sliding pad and of a loading spring which actuates the pad so that it engages said vane by elastic contact.

This arrangement has numerous disadvantages which include mainly a considerable surface wear of the vane, which accordingly, differently from the others, is made of a metallic alloy, for example a Zn + Al + Mg alloy, or of a high-performance plastic material which thus requires painting for aesthetic purposes. However, the sliding of the slider rapidly deteriorates the paint and the aesthetics of the vane quickly fades.

Another disadvantage of the above known arrangement resides in that the actuation load of the button is not constant but varies in the course of time and as the temperature varies.

A further disadvantage is constituted by the relative structural complication of the slider and by the consequent difficulty of assembly; these circumstances on one hand entail higher manufacturing costs and on the other hand reduce the operating reliability of said slider.

The aim of the present invention is to eliminate these and other disadvantages, and for this purpose an air vent as defined in the amended claims is provided.

Advantageously, according to the invention, the slider frame has a removable lid which is fitted onto it in a snap-together manner, the slider grip region being defined on the front surface of said lid.

Further characteristics and advantages of the present invention will become apparent from the following detailed description of a preferred embodiment thereof with reference to the accompanying exemplifying drawings, wherein:
figure 1 is a front view of an air vent according to the invention;
figure 2 is a partial longitudinal sectional view, taken along the plane II-II of figure 1;
figure 3 is a partial longitudinal sectional view, taken along the plane III-III of figure 1;
figure 4 is an exploded perspective view which illustrates in detail the frame-like structure of the slider, the related support and the removable lid of said frame.

In the drawings, the numeral 10 generally designates the vent, which is formed by a hollow body 11 shaped like a parallelepiped, inside which two rows 12 and 13 of flow deflection vanes are arranged; said rows are mutually perpendicular, and the vanes are individually pivoted to the body 11 of the vent. The first row 12, which is arranged upstream with reference to the air flow direction F, is constituted by a set of vertical vanes 120 which are mutually connected by a rod 14 which is articulated to them; the second row 13, arranged downstream with reference to the air flow, is constituted by a set of horizontal vanes 130 which are also mutually connected by a rod 15 which is articulated to them.

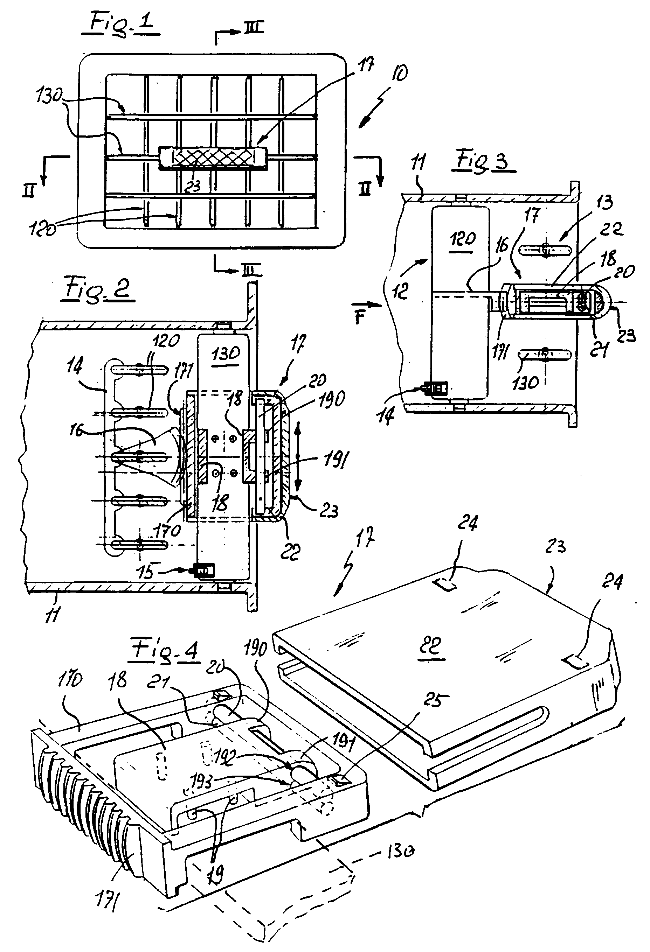

As clearly shown in figure 2, the central vane of the set of vertical vanes 120 is provided with a toothed sector 16 which meshes with the correspondingly toothed portion of a control slider 17 which is fitted, so as to slide freely, on the corresponding central vane of the set of horizontal vanes 130.

According to the present invention and in order to achieve the stated aim and objects, the slider 17 is coupled to the central vane of the row 13 with the interposition of a support 18 which is rigidly connected to said vane by means of riveted pins 19 and which protrudes in front of said vane forming at least one tab, preferably a pair of tabs 190-191 which are arranged fork-like and are crossed by at least one prism-shaped hole but preferably by pairs of cylindrical holes 192-193 arranged side by side. Respective cylindrical pins 20-21, for the guiding and rotational retention of the slider 17, pass in said holes and can slide therein with a preset friction; the ends of said pins are rigidly coupled to said slider. Said slider is formed by a frame 170 which surrounds and contains the support 18 and which is provided, on its front side directed toward the vanes 12, with the toothed portion 171, which is meant to mesh with the sector 16.

As clearly shown in figures 2 and 4, the transverse dimension of the support 18 is smaller than the transverse internal clearance of the frame 170, so that said frame can move laterally in the directions indicated by the arrows in figure 2 and perform an actuation stroke, in both directions, whose extent is equal to the difference between the transverse dimension of the support and the transverse clearance of the frame.

The guiding and retention pins 20 and 21 are preferably made of high-strength steel and have a lapped sliding surface.

According to an advantageous embodiment, the assembly constituted by the support 18, by the frame 170 and by the pins 20-21 is manufactured monolithically by molding in place; the support 18 and the frame 170 are made of heat-moldable polymeric material.

The support 18, with the associated frame 170, is mounted on the central vane of the row 13 and is coupled thereto by riveting the pins 19, which pass through corresponding holes provided on the vane; a lid 22 is then fitted on the frame. Said lid has, on its front side 23, the knurled grip region of the slider and, on its upper and/or lower side, a pair of slots 24 which cooperate with protruding tabs 25 of the frame for the snap-together coupling of the lid to said frame.

The effects of the present model are naturally extended to the models which achieve equal utility by using the same inventive concept.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Air vent (10), particularly for motor vehicles, with two mutually perpendicular rows (12,13) of air flow deflection vanes and with a control slider (17) which is slideably mounted on the central vane of one row and acts on a toothed sector (16) of the other row for the orientation of its vanes, characterized in that said central vane has a slider support (18) rigidly coupled thereto, said slider support having at least one tab (190,191) which protrudes frontally therefrom and which is provided with at least one hole (192,193) in which a corresponding slider guiding and retention pin (20,21) can slide with moderate friction; said slider comprising a frame (170) which surrounds the support and which has, on its front side, a toothed portion (171) for meshing with said toothed sector (16).

2. Air vent according to claim 1, characterized in that the transverse dimension of the slider support (18) is smaller than the corresponding transverse clearance of the frame (170) which forms the slider; the difference between said transverse dimension and said transverse clearance being equal to the stroke of the slider.

3. Air vent according to claims 1 and 2, characterized in that said support is provided with a pair of fork-like tabs (190,191) which are crossed by a pair of cylindrical holes (192,193) which are arranged side by side and in which corresponding cylindrical pins (20,21) for guiding and retaining the slider are contained so that they can slide.

4. Air vent according to the preceding claims, characterized in that the set constituted by the support, by the slider frame and by the frame guiding and retention pins is produced monolithically by molding in place; the support and the frame being made of heat-moldable polymeric material, the guiding and retention pins being made of high-strength steel with lapped sliding surface.

5. Air vent according to the preceding claims, characterized in that the slider support is rigidly coupled to the central vane by means of riveted pins (19).

6. Air vent according to claim 1 and any one of claims 2 to 5, characterized in that the slider frame has a removable lid (22) fitted over it in a snap-together manner, the slider grip region being defined on the front surface (23) of said lid.

## Patentansprüche

1. Luftaustritt (10), insbesondere für Kraftfahrzeuge, mit zwei zueinander rechtwinkligen Reihen (12,13) von Luftleitflächen und einem Regelschieber (17), der verschiebbar an der mittleren Leitfläche der einen Reihe angebracht ist und auf einen verzahnten Bereich (16) der anderen Reihe zwecks Ausrichtung deren Leitflächen wirkt, **dadurch gekennzeichnet, daß** an die besagte mittlere Leitfläche eine Schieberhalterung (18) fest angekoppelt ist, wobei die besagte Schieberhalterung mit wenigstens einem Vorsprung (190, 191) versehen ist, der sich vorderseitig davon erstreckt und mit wenigstens einem Loch (192, 193) versehen ist, in dem ein entsprechender Schieberführ- und -haltestift (20, 21) mit mäßiger Reibung gleiten kann, wobei der besagte Schieber einen Rahmen (170) aufweist, der die Halterung umgibt und auf seiner Vorderseite einen verzahnten Teil (171) zum Eingriff mit dem besagten verzahnten Bereich (16) aufweist.

2. Luftaustritt nach Anspruch 1, **dadurch gekennzeichnet, daß** die Querabmessung der Schieberhalterung (18) kleiner ist als der entsprechende Querfreiraum des den Schieber bildenden Rahmens (170), wobei der Unterschied zwischen der besagten Querabmessung und dem besagten Querfreiraum gleich dem Hub des Schiebers ist.

3. Luftaustritt nach den Ansprüchen 1 und 2, **dadurch gekennzeichnet, daß** die besagte Halterung mit einem Paar von gabelförmigen Vorsprüngen (190, 191) versehen ist, welche von einem Paar von zylindrischen Löchern (192, 193) gekreuzt werden, welche nebeneinander angeordnet sind und in welchen zylindrische Stifte (20, 21) zum Führen und Halten des Schiebers gleitbar enthalten sind.

4. Luftaustritt nach den vorhergehenden Ansprüchen, **dadurch gekennzeichnet, daß** daß der aus der Halterung, dem Schieberrahmen und den den Rahmen führenden und haltenden Stiften bestehende Satz einstöckig durch Umspritzen hergestellt ist, wobei die Halterung und der Rahmen aus unter Hitze spritzbarem Polymermaterial und die Führ- und Haltestifte aus hochfestem Stahl mit geläppter Gleitoberfläche bestehen.

5. Luftaustritt nach den vorhergehenden Ansprüchen, **dadurch gekennzeichnet, daß** die Schieberhalterung mittels genieteter Stifte (19) fest an die mittlere Leitfläche angekoppelt ist.

6. Luftaustritt nach Anspruch 1 und irgendeinem der Ansprüche 2 bis 5, **dadurch gekennzeichnet, daß** der Schieberrahmen mit einem abnehmbaren, durch eine Schnappverbindung aufgebrachten Deckel (22) versehen ist, wobei der Griffbereich des Schiebers auf der Vorderfläche (23) des besagten Deckels definiert ist.

## Revendications

1. Bouche d'aération (10), notamment pour véhicules automobiles, comportant deux rangées réciproquement perpendiculaires (12,13) d'ailettes de déviation du courant d'air et comportant un curseur de commande (17), qui est monté coulissant sur l'ailette centrale d'une rangée et agit sur un secteur denté (16) de l'autre rangée pour orienter les ailettes de cette dernière, caractérisée en ce que ladite ailette centrale possède un support de curseur (18) couplé rigidement à elle, ledit support de curseur possédant au moins une patte (190,191) qui fait saillie frontalement à partir du support et comporte au moins un trou (192,193), dans lequel une tige correspondante (20,21) de guidage et de retenue du curseur peut glisser avec un frottement modéré, ledit curseur possédant un cadre (170) qui entoure le support et qui possède, sur sa face avant, une partie dentée (171) destinée à engrener avec ledit secteur denté (16).

2. Bouche d'aération selon la revendication 1, caractérisée en ce que la dimension transversale du support de curseur (18) est inférieure à la dimension transversale intérieure correspondante du cadre (170) qui forme le curseur; la différence entre ladite dimension transversale et ladite dimension transversale intérieure étant égale à la course du curseur.

3. Bouche d'aération selon les revendications 1 et 2, caractérisée en ce que ledit support est équipé d'un couple de pattes en forme de fourche (190,191), que traversent un couple de trous cylindriques (192,193), qui sont disposés côte-à-côte et dans lesquels sont logées de manière à pouvoir glisser des tiges cylindriques correspondantes (20,21) servant à guider et retenir le curseur.

4. Bouche d'aération selon les revendications précédentes, caractérisée en ce que l'ensemble constitué par le support, le cadre du curseur et les tiges de guidage et de retenue du cadre est fabriqué de façon monolithique par moulage en position; le support et le cadre étant constitués par un matériau polymère moulable à chaud, et les tiges de guidage et de retenue étant constituées en acier à haute résistance possédant une surface de glissement polie.

5. Bouche d'aération selon les revendications précédentes, caractérisée en ce que le support du curseur est couplé rigidement à l'ailette centrale au moyen de tétons rivetés (19).

6. Bouche d'aération selon la revendication 1 et l'une quelconque des revendications 2 à 5, caractérisée en ce que le cadre du curseur possède un couvercle amovible (22) monté sur le curseur selon un mode à encliquetage, la partie de préhension du curseur étant définie par la surface avant (23) dudit couvercle.
